(19) Europäisches Patentamt / European Patent Office / Office européen des brevets

(11) EP 4 546 223 A1

(12) EUROPEAN PATENT APPLICATION
published in accordance with Art. 153(4) EPC

(43) Date of publication:
30.04.2025 Bulletin 2025/18

(21) Application number: 23826571.4

(22) Date of filing: 21.06.2023

(51) International Patent Classification (IPC):
G06N 20/00 (2019.01)

(86) International application number:
PCT/CN2023/101961

(87) International publication number:
WO 2023/246926 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.06.2022 CN 202210716223

(71) Applicant: Alibaba (China) Co., Ltd.
Binjiang District
Hangzhou, Zhejiang 310052 (CN)

(72) Inventors:
• CHEN, Bolin
  Hong Kong, Kowloon Tong, Hong Kong (CN)
• WANG, Zhao
  Beijing 100102 (CN)
• YE, Yan
  San Diego, CA 92130 (US)
• WANG, Shiqi
  Hong Kong, Kowloon Tong, Hong Kong (CN)

(74) Representative: Patentgruppen A/S
Aaboulevarden 31, 4th Floor
8000 Aarhus C (DK)

(54) MODEL TRAINING METHOD, VIDEO ENCODING METHOD, AND VIDEO DECODING METHOD

(57) Embodiments of the present application provide a model training method, a video encoding method, and a decoding method. The model training method comprises: acquiring a reference sample frame and a plurality of consecutive to-be-encoded sample frames; deforming the reference sample frame through a generator in an initial generative model to generate reconstructed sample frames; inputting each reconstructed sample frame and the corresponding to-be-encoded sample frame into a first discriminator in the initial generative model to obtain a first identification result; splicing the to-be-encoded sample frames in a timestamp order to obtain a spliced to-be-encoded sample frame, and splicing the reconstructed sample frames to obtain a spliced reconstructed sample frame; inputting the spliced to-be-encoded sample frame and the spliced reconstructed sample frame into a second discriminator in the initial generative model to obtain a second identification result; obtaining an adversarial loss value based on the first identification result and the second identification result; and training the initial generative model based on the adversarial loss value. The present application enables that the reconstructed video frame sequence and the to-be-encoded video frame sequence are kept consistent in time domain, thereby improving the reconstruction quality.

Fig. 2

## Description

The present application claims priority to the Chinese patent application No. 202210716223.2 filed with the Chinese Patent Office on June 23, 2022 and entitled "MODEL TRAINING METHOD, VIDEO ENCODING METHOD AND VIDEO DECODING METHOD," which is incorporated by reference herein in its entirety.

## Technical field

Embodiments of the present application relate to the field of computer technology, and more particularly, to a model training method, a video encoding method, and a decoding method.

## Background

Video encoding and decoding is the key to achieve video conferencing, live video broadcasting, etc. With the continuous development of machine learning, a codec method based on deep video generation may be used to perform video (especially facial videos) encoding and decoding operations. This method mainly uses the generator, a neural network model, in a generative model to deform a reference frame based on the movement of a to-be-encoded frame, and generate a reconstructed frame corresponding to the to-be-encoded frame.

During a model training phase, the above-mentioned generative model is usually a generative adversarial network including a generator and a discriminator. During training, to-be-encoded video frames and reconstructed video frames generated by the generator are inputted into the discriminator, which performs authenticity identification and outputs identification results. Then, a loss function is constructed based on the identification results to complete the model training.

However, in the related technologies, when a discriminator performs authenticity identification, it only considers the similarity between the reconstructed video frame and the to-be-encoded video frame in the spatial domain, i.e., only the similarity between a single reconstructed video frame and the corresponding to-be-encoded video frame is compared. When the above generative model is used to reconstruct video frames, resulting reconstructed video frame sequences (reconstructed video clips) usually have phenomena of visual flickering and floating artifacts, and the video reconstruction quality is relatively poor.

## Summary

In light of the foregoing, embodiments of the present application provide a model training method, a video encoding method, and a decoding method to at least partially solve the above-mentioned problem.

According to a first aspect of the embodiments of the present specification, a model training method is provided, comprising:

> acquiring a reference sample frame and a plurality of consecutive to-be-encoded sample frames;
> deforming the reference sample frame by using a generator in an initial generative model to generate reconstructed sample frames corresponding to each of the to-be-encoded sample frames;
> inputting each reconstructed sample frame and the corresponding to-be-encoded sample frame into a first discriminator in the initial generative model to obtain a first identification result;
> according to a timestamp order, splicing all the to-be-encoded sample frames to obtain a spliced to-be-encoded sample frame, and splicing all the reconstructed sample frames to obtain a spliced reconstructed sample frame;
> inputting the spliced to-be-encoded sample frame and the spliced reconstructed sample frame into a second discriminator of the initial generative model to obtain a second identification result; and
> obtaining an adversarial loss value based on the first identification result and the second identification result, and training the initial generative model based on the adversarial loss value to obtain a trained generative model.

According to a second aspect of the embodiments of the present specification, a video decoding method is provided, comprising:

> acquiring and decoding a video bitstream to obtain a reference video frame and to-be-encoded features;
> extracting features from the reference video frame to obtain reference features; and performing, based on the to-be-encoded features and the reference features, motion estimation to obtain a motion estimation result;
> deforming, based on the motion estimation result, the reference video frame using a generator in a pre-trained generative model to generate a reconstructed video frame,
> wherein the generative model is obtained using the model training method according to the first aspect.

According to a third aspect of the embodiments of the present application, a video decoding method is provided, which is applied to a conference terminal device, and the method comprises:

acquiring and decoding a video bitstream to obtain a reference video frame and to-be-encoded features, wherein after a video clip captured by a video capture device is acquired and features of a to-be-encoded video frame in the video clip are extracted to obtain to-be-encoded features, the video bitstream is obtained by encoding the to-be-encoded features and the reference video frame in the video clip;

extracting features from the reference video frame to obtain reference features; and performing, based on the to-be-encoded features and the reference features, motion estimation to obtain a motion estimation result;

deforming, based on the motion estimation result, the reference video frame using a generator in a pre-trained generative model to generate a reconstructed video frame, wherein displaying the reconstructed video frame in a display interface,

wherein the generative model is obtained using the model training method according to the first aspect.

According to a fourth aspect of the embodiments of the present application, an electronic device is provided, comprising: a processor, a memory, a communications interface, and a communications bus, wherein the processor, the memory, and the communications interface communicate with each other through the communications bus; the memory is configured to store at least one executable instruction that causes the processor to execute operations corresponding to the model training method according to the first aspect or operations corresponding to the video decoding method according to the second aspect or the third aspect.

According to a fifth aspect of the embodiments of the present application, a computer storage medium having stored thereon a computer program is provided, wherein the program, when executed by a processor, is enabled to implement the model training method according to the first aspect or the video decoding method according to the second aspect or the third aspect.

According to a sixth aspect of the present application, a computer program product comprising computer instructions is provided, wherein the computer instructions instruct a computing device to perform operations corresponding to the model training method according to the first aspect, or operations corresponding to the video decoding method according to the second aspect or the third aspect.

The model training method provided in the embodiments of the present application generates reconstructed sample frames corresponding to a plurality of consecutive to-be-coded sample frames through the generator in the initial generative model. While an authenticity identification on a single reconstructed sample frame and the corresponding to-be-encoded sample frame is performed, another authenticity identification is also performed on the spliced reconstructed sample frame spliced together from all the reconstructed sample frames in the timestamp order and the spliced to-be-encoded sample frame spliced together from all the to-be-encoded sample frames in the timestamp order. Further, the adversarial loss value is generated based on the identification results from the single sample frames (first identification results) and the identification results from the spliced sample frames (second identification results), thereby completing the training of the initial generative model. That is, in the embodiments of the present application, when an authenticity identification is performed, not only the similarity between the reconstructed sample frame and the to-be-encoded sample frame in the spatial domain is considered, the similarity between the reconstructed sample frame and the to-be-encoded sample frame in the temporal domain is also considered. In other words, by comparing the similarity between the spliced to-be-encoded sample frame and the spliced reference sample frame, it is considered whether there is a continuous relationship between the consecutive reconstructed sample frames in the temporal domain that is present in the consecutive to-be-encoded sample frames. Therefore, by training the model based on the above identification results and reconstructing the video frames based on the trained generative model, the reconstructed video frame sequences are kept consistent with the to-be-encoded video frame sequences in the temporal domain, thereby improving the phenomena of flickering and floating artifacts and enhancing the video reconstruction quality.

## Brief description of drawings

In order to more clearly describe the technical solutions in the embodiments of the present application or in the prior art, the following briefly describes the accompanying drawings needed for describing the embodiments or the prior art. Apparently, the accompanying drawings described below only show some of the embodiments of the present application, and those of ordinary skill in the art may derive other accompanying drawings therefrom.

FIG. 1 is a schematic diagram of a framework of an encoding and decoding method based on deep video generation;
FIG. 2 is a flowchart of steps of a model training method according to Embodiment I of the present application;
FIG. 3 is a schematic diagram of a network architecture of a generative model according to the embodiment shown in FIG. 2;

FIG. 4 is a flowchart of steps of a model training method according to Embodiment II of the present application;
FIG. 5 is a schematic diagram of a scenario example according to the embodiment shown in FIG. 4;
FIG. 6 is a flowchart of steps of a video encoding method according to Embodiment III of the present application;
FIG. 7 is a flowchart of steps of a video decoding method according to Embodiment IV of the present application;
FIG. 8 is a flowchart of steps of a video decoding method according to Embodiment V of the present application;
FIG. 9 is a structural block diagram of a model training apparatus according to Embodiment VI of the present application;
FIG. 10 is a structural block diagram of a video encoding apparatus according to Embodiment VII of the present application;
FIG. 11 is a structural block diagram of a video decoding apparatus according to Embodiment VIII of the present application;
FIG. 12 is a structural block diagram of a video decoding apparatus according to Embodiment IX of the present application; and
FIG. 13 is a schematic diagram of the structure of an electronic device according to Embodiment X of the present application.

## Description of embodiments

In order to enable those skilled in the art to better understand the technical solution in the embodiments of the present application, the technical solution in the embodiments of the present application will be clearly and completely described below with reference to the accompanying drawings in the embodiments of the present application. Obviously, the described embodiments are merely some but not all of the embodiments of the present application. Based on the embodiments of the present application, all other embodiments obtained by those of ordinary skill in the art shall fall within the protection scope of the embodiments of the present application.

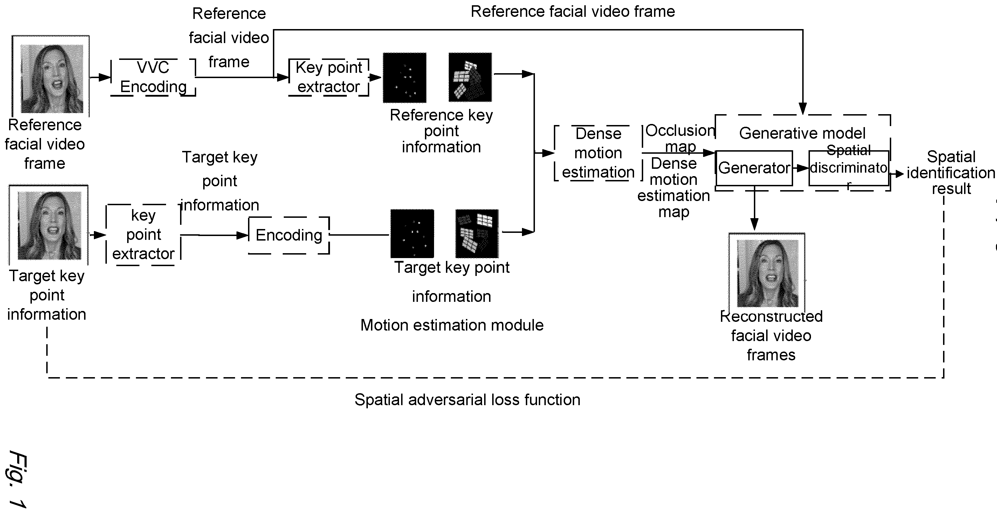

The main principle of the encoding and decoding method based on deep video generation is to use the generator in the generative model to deform the reference frame based on the movement of the to-be-encoded frame, so as to obtain a reconstructed frame corresponding to the to-be-encoded frame. Please refer to FIG. 1, a schematic diagram of a framework of the model training stage in the encoding and decoding method based on deep video generation. In the training stage, the generative model usually adopts a generative adversarial network composed of a generator and a spatial discriminator. After the generator obtains the reconstructed frame, the reconstructed frame and the to-be-encoded frame are inputted into the spatial discriminator, which performs authenticity identification and outputs the spatial identification result. Then, a spatial adversarial loss function is constructed based on the spatial identification result to complete the model training.

The basic framework of the training process is explained below in combination with FIG. 1.

In the first step, the encoding stage, an encoder uses a feature extractor to extract target key point information of a single target facial to-be-encoded video frame, and encodes the target key point information. At the same time, a reference facial video frame is encoded using the traditional image encoding methods (such as VVC, HEVC, etc.).

The second step is the decoding stage. A motion estimation model in the decoder extracts the reference key point information of the reference facial video frame through a key point extractor, and performs dense motion estimation based on the reference key point information and the target key point information to obtain a dense motion estimation map and an occlusion map. The dense motion estimation map represents the relative motion relationship between the target facial video frame and the reference facial video frame in the feature domain represented by the key point information. The occlusion map represents the degree of occlusion of each pixel in the target facial video frame.

The third step is the decoding stage. A generator inside the generative model in the decoder deforms the reference facial video frame based on the dense motion estimation map to obtain a deformation result, and then multiplies the deformation result with the occlusion map to output the reconstructed facial video frame. At the same time, after the generator obtains the reconstructed frame, the reconstructed frame and the to-be-encoded frame are inputted into the spatial discriminator, which performs authenticity identification and outputs a spatial identification result.

The fourth step is the model training stage. Based on the spatial identification results and the target facial video frame, a spatial adversarial loss value is generated. Then, the model is trained according to the above spatial adversarial loss value, and a trained feature extractor (feature extraction model), a trained motion estimation model, and a trained generative model are obtained.

In the training method shown in FIG. 1, when the spatial discriminator performs authenticity identification, it considers only the similarity between a single reconstructed video frame and its corresponding to-be-encoded video frame in the spatial domain, i.e., only the similarity between a single reconstructed video frame and the corresponding to-be-encoded video frame is compared. When the above generative model is used to reconstruct video frames, the resulting reconstructed video frame sequences (reconstructed video clips) are usually visually characterized by flickering and floating artifacts, and the video reconstruction quality is relatively poor.

In the embodiments of the present application, reconstructed sample frames corresponding to a plurality of consecutive to-be-coded sample frames are generated through the generator in the initial generative model. While an authenticity identification on a single reconstructed sample frame and the corresponding to-be-encoded sample frame is performed using the first discriminator (spatial discriminator), another authenticity identification is also performed using the second discriminator (temporal discriminator) on the spliced reconstructed sample frame spliced together from all the reconstructed sample frames in the timestamp order and the spliced to-be-encoded sample frame spliced together from all the to-be-encoded sample frames in the timestamp order. As such, the adversarial loss value is generated based on the identification results from the single sample frames (first identification results) and the identification results from the spliced sample frames (second identification results), and the training of the initial generative model may then be completed. That is to say, in the embodiments of the present application, when an authenticity identification is performed, not only the similarity between the reconstructed sample frame and the to-be-encoded sample frame in the spatial domain is considered, the similarity between the reconstructed sample frame and the to-be-encoded sample frame in the temporal domain is also considered. In other words, by comparing the similarity between the spliced to-be-encoded sample frame and the spliced reference sample frame, it is considered whether there is a continuous relationship between the consecutive reconstructed sample frames in the temporal domain that is present in the consecutive to-be-encoded sample frames. Therefore, by training the model based on the above identification results and reconstructing the video frames based on the trained generative model, the reconstructed video frame sequences can be kept consistent with the to-be-encoded video frame sequences in the temporal domain, thereby improving the phenomena of flickering and floating artifacts and enhancing the video reconstruction quality.

The implementation of the embodiments of the present application will be further illustrated with reference to the accompanying drawings of the embodiments of the present application.

Embodiment I

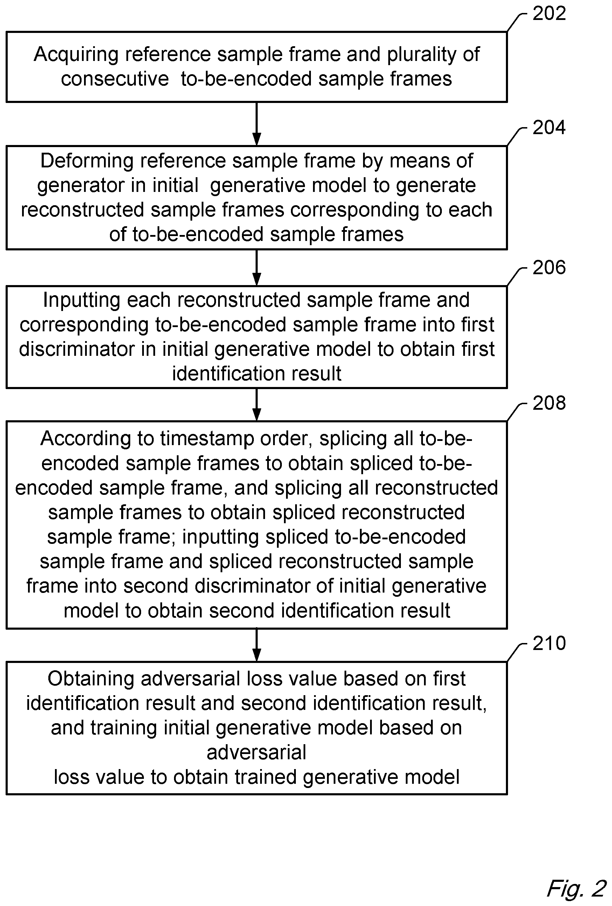

Please refer to FIG. 2, which is a flowchart of steps of a model training method according to Embodiment I of the present application. Specifically, the model training method provided in this embodiment comprises the following steps: S202: acquiring a reference sample frame and a plurality of consecutive to-be-encoded sample frames.

Specifically, the reference sample frame and each to-be-encoded sample frame in the embodiment of the present application may be video frames derived from the same video sample. Further, the reference sample frame and each to-be-encoded sample frame may be facial video frames.

S204: deforming the reference sample frame by using a generator in an initial generative model to generate reconstructed sample frames corresponding to each of the to-be-encoded sample frames.

Specifically, the reconstructed sample frame may be obtained in the following manner:

performing, for each to-be-encoded sample frame, motion estimation on the to-be-coded sample frame based on reference sample features, so as to obtain the motion estimation results; inputting the reference sample frame and the motion estimation result into the generator in the initial model to obtain the reconstructed sample frames corresponding to the to-be-encoded sample frames. The motion estimation result represents the relative motion relationship between the reference sample frame and the to-be-encoded sample frame in a preset feature domain.

Furthermore, it is possible to: extract reference sample features of the reference sample frame and to-be-coded sample features of each of the to-be-encoded sample frames. For each to-be-encoded sample frame, motion estimation is performed based on the reference sample features and the to-be-coded sample features of the to-be-encoded sample frame, so as to obtain a motion estimation result. The reference sample frame and the motion estimation result are inputted into the initial generator to obtain the reconstructed sample frames corresponding to the to-be-encoded sample frames.

S206: inputting each reconstructed sample frame and the corresponding to-be-encoded sample frame into a first discriminator in the initial generative model to obtain a first identification result.

The first discriminator in the embodiment of the present application may also be referred to as a spatial discriminator. Specifically, for a certain reconstructed sample frame and a corresponding to-be-encoded sample frame, after the two sample frames are inputted into the first discriminator, features of the two sample frames are respectively extracted thereby to obtain respective feature maps of the two sample frames (reconstructed feature map and to-be-encoded feature map). Then, through the comparison of the distributions of the two feature maps in the spatial domain to see if the two are similar, a first output result characterizing whether the two sample frames are the same (or whether the two sample frames are similar enough) is obtained. For example: when the first output result is: 1 (true), this indicates that the two sample frames are the same; and when the first output result is: 0 (false), it indicates that the two sample frames are different sample frames. **In** the embodiment of the present application, the first identification result may include: a feature map of the reconstructed sample frame extracted by the first discriminator (hereinafter referred to as: the first identification result of the reconstructed sample frame), a feature map of the to-be-encoded sample frame extracted by the first discriminator (hereinafter referred to as: the first identification result of the to-be-encoded sample frame), and the above-mentioned first output result.

S208: according to a timestamp order, splicing the to-be-encoded sample frames to obtain a spliced to-be-encoded sample frame, and splicing the reconstructed sample frames to obtain a spliced reconstructed sample frame; inputting the spliced to-be-encoded sample frame and the spliced reconstructed sample frame into a second discriminator of the initial generative model to obtain a second identification result.

The second discriminator in the embodiment of the present application may also be referred to as a temporal discriminator. Similar to the first discriminator, for the spliced reconstructed sample frame and the corresponding spliced to-be-encoded sample frame, after the two sample frames are inputted into the second discriminator, features of the two sample frames are respectively extracted thereby to obtain respective feature maps of the two sample frames. Then, through the comparison of the distributions of the two feature maps in the spatial domain to see if the two are similar, a second output result characterizing whether the two sample frames are the same (or whether the two sample frames are similar enough) is obtained. In the embodiment of the present application, the second identification result may include: a feature map of the spliced reconstructed sample frame extracted by the second discriminator (hereinafter referred to as: the second identification result of the spliced reconstructed sample frame), a feature map of the spliced to-be-encoded sample frame extracted by the second discriminator (hereinafter referred to as: the second identification result of the spliced to-be-encoded sample frame), and the above-mentioned second output result.

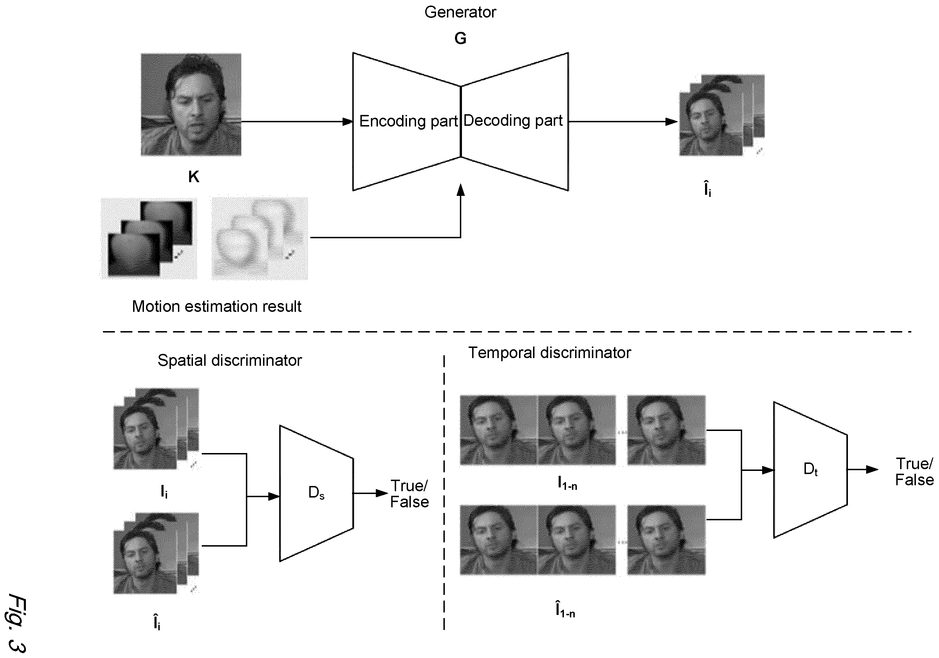

In the embodiment of the present application, the generative model includes: a generator, a first discriminator, and a second discriminator, wherein the first discriminator and the second discriminator are connected in parallel after the generator to perform authenticity identification based on the reconstructed sample frames outputted by the generator. Specifically, please refer to FIG. 3, which is a schematic diagram of a network architecture of a generative model according to the embodiment shown in FIG. 2.

The generator G includes an encoding part and a decoding part. The reference sample frame K and a motion estimation result corresponding to a single to-be-encoded sample frame $I_i$ in the consecutive to-be-encoded sample frames $I_1, I_2, ..., I_n$ are inputted into the generator. Through the encoding part and the decoding part of the generator, the reconstructed sample frame $\hat{I}_i$ corresponding to the to-be-encoded sample frame $I_i$ is finally outputted, thereby finally obtaining the reconstructed sample frames: $\hat{I}_1, \hat{I}_2, ..., \hat{I}_n$. Here, i is a natural number greater than or equal to 1 and less than or equal to n.

The spatial discriminator (the first discriminator) $D_s$, located after the generator G, is configured to perform authenticity identification on a single reconstructed sample frame $\hat{I}_i$ and a corresponding to-be-encoded sample frame $I_i$, so as to output a first output result. The temporal discriminator (the second discriminator) $D_t$, located after the generator and connected in parallel with the spatial discriminator $D_s$, is configured to perform authenticity identification on the spliced to-be-encoded sample frame $I_{1-n}$ and the spliced reconstructed sample frame $\hat{I}_{1-n}$, so as to output a second output result.

S210: obtaining an adversarial loss value based on the first identification result and the second identification result, and training the initial generative model based on the adversarial loss value to obtain a trained generative model.

Optionally, in some embodiments, the adversarial loss value may include: a generative adversarial loss value, a spatial adversarial loss value, and a temporal adversarial loss value, each of which may be obtained in the following manner:

> obtaining the generative adversarial loss value based on the first identification results of each reconstructed sample frames, wherein the greater the sum of the first identification results of each reconstructed sample frames is, the smaller the generative adversarial loss value will be;
> obtaining the spatial adversarial loss value based on a difference between the first identification result of each reconstructed sample frame and the first identification result of the corresponding to-be-encoded sample frame, wherein the smaller the difference between the first identification result of each reconstructed sample frame and the first identification result of the corresponding to-be-encoded sample frame, the smaller the spatial adversarial loss value will be; and
> obtaining the temporal adversarial loss value based on a difference between the second identification result of the spliced to-be-encoded sample frame and the second identification result of the spliced reconstructed sample frame. Herein, the smaller the difference between the second identification result of the spliced to-be-encoded sample frame and the second identification result of the spliced reconstructed sample frame is, the smaller the temporal adversarial loss value will be.

As described above, the first identification result of each reconstructed sample frame can be the feature map of each reconstructed sample frame extracted by the first discriminator; the first identification result of the to-be-encoded sample frame can be the feature map of the to-be-encoded sample frame extracted by the first discriminator; the second identification result of the spliced to-be-encoded sample frame can be the feature map of the spliced to-be-encoded sample frame extracted by the second discriminator; and the second identification result of the spliced reconstructed sample frame can be the feature map of the spliced reconstructed sample frame extracted by the second discriminator.

Further, the generative adversarial loss value may be obtained as follows:

acquiring a probability distribution of the first identification result of each reconstructed sample frame as a first reconstruction probability distribution for each reconstructed sample frame; and obtaining the generative adversarial loss value based on an expected value of the first reconstruction probability distribution for each reconstructed sample frame;

the spatial adversarial loss value may be obtained in the following manner: acquiring a probability distribution of the first identification result of each to-be-encoded sample frame as a first to-be-encoded probability distribution for each to-be-encoded sample frame; and obtaining the spatial adversarial loss value based on an expected difference between the expected value of the first reconstructed probability distribution for each to-be-encoded sample frame and an expected value of the first to-be-encoded probability distribution for each to-be-encoded sample frame;

the temporal adversarial loss value may be obtained in the following manner: acquiring a probability distribution of the second identification result of the spliced reconstructed sample frame as a second reconstructed probability distribution; acquiring a probability distribution of the second identification result of the spliced to-be-encoded sample frame as a second to-be-encoded probability distribution; and obtaining the temporal adversarial loss value based on an expected difference between an expected value of the second reconstructed probability distribution and an expected value of the second to-be-encoded probability distribution.

Specifically, for generative adversarial loss values, the sum of the expected values of the first reconstruction probability distributions of each of the reconstructed sample frames may be used as the generative adversarial loss value. The larger the sum of the above expected values is, the smaller the generative adversarial loss value will be. Furthermore, the above generative adversarial loss value may be expressed using the following equation:

$$L_G = -\sum_{i=1}^{n} E_{\hat{I}_i \sim P_g}\left[D_s(\hat{I}_i)\right]$$

Herein, $L_G$ represents the generative adversarial loss value; $D_s(\hat{I}_i)$ represents the first identification result of the reconstructed sample frame $\hat{I}_i$ ; $P_g[D_s(\hat{I}_i)]$ represents the probability distribution of $D_s(\hat{I}_i)$, i.e., the first reconstructed probability distribution of the reconstructed sample frame $\hat{I}_i$; $E_{\hat{I}_i \sim P_g}[D_s(\hat{I}_i)]$ represents the expected value of the first reconstructed probability distribution of the reconstructed sample frame $\hat{I}_i$; n is the total number of the reconstructed sample frames, i.e., the total number of to-be-encoded sample frames.

Furthermore, since the first discriminator and the second discriminator usually include multiple different operation layers, for each reconstructed sample frame, the expected value corresponding to the probability distribution of the identification results (the feature map extracted by each operation layer) outputted by each operation layer of the first discriminator may be calculated separately, and then the expected values corresponding to the probability distribution of all operation layers can be summed to obtain the expected value corresponding to the probability distribution of the first identification result of the reconstructed sample frame. This enhances the realistic feeling of the reconstructed video frames.

Specifically, it can be expressed using the following equation:

$$L_G = -\sum_{i=1}^{n}\sum_{a=1}^{k} E_{\hat{I}_i \sim P_g}\left[D_{sa}(\hat{I}_i)\right]$$

Herein, $D_{sa}(\hat{I}_i)$ represents the identification result (the extracted feature map) of the reconstructed sample frame $\hat{I}_i$ outputted by the a-th operation layer of the first discriminator; $P_g[D_{sa}(\hat{I}_i)]$ represents the probability distribution of $D_{sa}(\hat{I}_i)$ ; $E_{\hat{I}_i \sim P_g}[D_{sa}(\hat{I}_i)]$ represents the expected value of $P_g[D_{sa}(\hat{I}_i)]$; k is the total number of operation layers included in the first discriminator, also the total number of operation layers included in the second discriminator.

For the spatial adversarial loss value, the spatial adversarial loss value may be obtained based on an expected difference between the expected value of the first reconstructed probability distribution for each reconstructed sample frame and an expected value of the first to-be-encoded probability distribution for each to-be-encoded sample frame. The larger the above expected difference is, the greater the spatial adversarial loss value will be. Furthermore, the above spatial adversarial loss value may be expressed using the following equation:

$$L_{D_s} = \sum_{i=1}^{n} \left( E_{\hat{I}_i \sim P_g} \left[ D_s(\hat{I}_i) \right] - E_{I_i \sim P_r} \left[ D_s(I_i) \right] \right)$$

Herein, $L_{D_s}$ represents the spatial adversarial loss value; $D_s(I_i)$ represents the first identification result of the to-be-encoded sample frame $I_i$; $_{P_r}[D_s(I_i)]$ represents the probability distribution of $D_s(I_i)$; and $E_{I_i \sim P_r}[D_s(I_i)]$ is the expected value of $P_r[D_s(I_i)]$.

Similar to the generative adversarial loss value, furthermore, the spatial adversarial loss value may be obtained using the following equation:

$$L_{D_s} = \sum_{i=1}^{n} \sum_{a=1}^{k} \left( E_{\hat{I}_i \sim P_g} \left[ D_{sa}(\hat{I}_i) \right] - E_{I_i \sim P_r} \left[ D_{sa}(I_i) \right] \right)$$

Herein, $D_{sa}(I_i)$ represents the identification result (the extracted feature map) of the to-be-encoded sample frame $I_i$ outputted by the a-th operation layer of the first discriminator; $_{P_r}[D_{sa}(I_i)]$ represents the probability distribution of $D_{sa}(I_i)$; $E_{I_i \sim P_r}[D_{sa}(I_i)]$ represents the expected value of $_{P_r}[Dsa(I_i)]$; $D_{sa}(\hat{I}_i)$ represents the identification result (the extracted feature map) of $\hat{I}_i$ outputted by the a-th operation layer of the first discriminator; $_{P_g}[D_{sa}(\hat{I}_i)]$ represents the probability distribution of $D_{sa}(\hat{I}_i)$; and $E_{\hat{I}_i \sim P_g}[D_{sa}(\hat{I}_i)]$ represents the expected value of $P_g[D_{sa}(\hat{I}_i)]$.

For the temporal adversarial loss value, the greater the expected difference between the expected value of the second reconstructed probability distribution and the expected value of the second to-be-encoded probability distribution is, the greater the temporal adversarial loss value will be. Furthermore, the above temporal adversarial loss value may be expressed using the following equation:

$$L_{D_t} = E_{\hat{I}_{1-n} \sim P_g} \left[ D_t(\hat{I}_{1-n}) \right] - E_{I_{1-n} \sim P_r} \left[ D_t(I_{1-n}) \right]$$

Herein, $L_{D_t}$ represents the temporal adversarial loss value; $D_t(\hat{I}_{1-n})$ represents the second identification result of the spliced reconstructed sample frame $\hat{I}_{1-n}$; $_{P_g}[D_t(\hat{I}_{1-n})]$ represents the probability distribution of $D_t(\hat{I}_{1-n})$; $E_{\hat{I}_{1-n} \sim P_g}[D_t(\hat{I}_{1-n})]$ represents the expected value of $_{P_g}[D_t(\hat{I}1-n)]$; $D_t(I_{1-n})$ represents the second identification result of the spliced to-be-encoded sample frame $I_{1-n}$; $_{P_r}[D_t(I_{1-n})]$ represents the probability distribution of $D_t(I_{1-n})$; and $E_{I_{1-n} \sim P_r}[D_t(I_{1-n})]$ represents the expected value of $_{P_r}[D_t(I_{1-n})]$.

Similar to the spatial adversarial loss value, the temporal adversarial loss value may be obtained using the following equation.

$$L_{D_t} = \sum_{a=1}^{k} E_{\hat{I}_{1-n} \sim P_g} \left[ D_{ta}(\hat{I}_{1-n}) \right] - \sum_{i=1}^{k} E_{I_{1-n} \sim P_r} \left[ D_{ta}(I_{1-n}) \right]$$

Herein, $D_{ta}(\hat{I}_{1-n})$ represents the identification result (the extracted feature map) of the spliced reconstructed sample frame $\hat{I}_{1-n}$ outputted by the a-th operation layer of the second discriminator; $E_{\hat{I}_{1-n} \sim P_g}[D_{ta}(\hat{I}_{1-n})]$ represents the expected value of the probability distribution of $D_{ta}(\hat{I}_{1-n})$; $D_{ta}(I_{1-n})$ represents the identification result (the extracted feature map) of the spliced to-be-encoded sample frame $I_{1-n}$ outputted by the a-th operation layer of the second discriminator; and $E_{I_{1-n} \sim P_r}[D_{ta}(I_{1-n})]$ represents the expected value of the probability distribution of $D_{ta}(I_{1-n})$.

Optionally, in some embodiments, before step 210, the method may further include: generating a perceptual loss value based on each reconstructed sample frame and each to-be-encoded sample frame; correspondingly, step 210 may include: training an initial generative model based on the adversarial loss value and the perceptual loss value to obtain a trained generative model.

Optionally, in some embodiments, step 204 may include:

performing, based on the reference sample frame, motion estimation on each to-be-encoded sample frame to obtain a motion estimation result for each to-be-encoded sample frame;
inputting, for each to-be-encoded sample frame, the reference sample frame and the motion estimation results of the to-be-encoded sample frame into the generator of the initial generative model, and deforming the reference sample frame through the generator to generate the reconstructed sample frames corresponding to the to-be-encoded sample frames.

Correspondingly, before step 210, the following steps may further be included:

inputting each to-be-encoded sample frame into a pre-trained motion prediction module to obtain actual motion results corresponding to each of the to-be-encoded samples; and
generating an optical flow loss value based on a difference between the motion estimation results and the actual motion results of each of the to-be-encoded sample frames.

The training the initial generative model based on the adversarial loss value and the perceptual loss value to obtain the trained generative model comprises:
training the initial generative model based on the adversarial loss value, the perceptual loss value, and the optical flow loss value to obtain the trained generative model.

Specifically, in the above embodiment, the motion prediction model may be a pre-trained neural network model for obtaining the relative motion relationship (i.e., the actual motion result) between the inputted to-be-encoded sample frame and the reference sample frame. In the embodiment of the present application, there is no limitation on the specific structure of the prediction model. For example, it may be an end-to-end spatial pyramid network (SpyNet).

For the optical flow loss value, the greater the difference between the motion estimation results and the actual motion results of each of the to-be-encoded sample frames, the greater the optical flow loss value will be. In other words, the optical flow loss value can characterize the accuracy of the motion estimation result. Therefore, in the model training process, the motion estimation process may be supervised by further taking into account the optical flow loss value on top of the adversarial loss value and the perceptual loss value, so that when encoding and decoding operations are performed based on the trained model to obtain reconstructed video frames, the accuracy of the motion estimation process may be improved, thereby further improving the quality of the reconstructed video frames.

Optionally, in some embodiments, the process of generating an optical flow loss value based on a difference between the motion estimation results and the actual motion results of each of the to-be-encoded sample frames may include:

calculating, for each to-be-encoded sample frame, the difference between the motion estimation result and the actual motion result thereof as a motion difference corresponding to the to-be-encoded sample frame; and
summing each motion difference as the optical flow loss value.

Specifically, the optical flow loss value may be calculated using the following equation.

$$L_{flow} = \sum_{i=1}^{n} |M_{original}^{i} - M_{dense}^{i}|$$

Herein, $L_{flow}$ is the optical flow loss value; $M_{original}^{i}$ is the actual motion result of the to-be-encoded sample frame $I_i$; $M_{dense}^{i}$ is the motion estimation result of the to-be-encoded sample frame $I_i$; and n is the total number of the to-be-encoded sample frames.

The model training method provided in the embodiments of the present application generates reconstructed sample frames corresponding to a plurality of consecutive to-be-coded sample frames through the generator in the initial generative model. While an authenticity identification on a single reconstructed sample frame and the corresponding to-be-encoded sample frame is performed, another authenticity identification is also performed on the spliced reconstructed sample frame spliced together from all the reconstructed sample frames in the timestamp order and the spliced to-be-encoded sample frame spliced together from all the to-be-encoded sample frames in the timestamp order. As such, the adversarial loss value is generated based on the identification results from the single sample frames (first identification results) and the identification results from the spliced sample frames (second identification results), thereby completing the training of the initial generative model. That is to say, in the embodiments of the present application, when an authenticity identification is performed, not only the similarity between the reconstructed sample frame and the to-be-encoded sample frame in the spatial domain is considered, the similarity between the reconstructed sample frame and the to-be-encoded sample frame in the temporal domain is also considered. In other words, by comparing the similarity between the spliced to-be-encoded sample frame and the spliced reference sample frame, it is considered whether there is a continuous relationship between the consecutive reconstructed sample frames in the temporal domain that is present in the consecutive to-be-encoded sample frames. Therefore, by training the model based on the above identification results and reconstructing the video frames based on the trained generative model, the reconstructed video frame sequences can be kept consistent with the to-be-encoded video frame sequences in the temporal domain, thereby improving the phenomena of flickering and floating artifacts and enhancing the video reconstruction quality.

The model training method of the embodiment may be executed by any appropriate electronic device with data capabilities, including but not limited to: servers, PCs, and the like.

Embodiment II

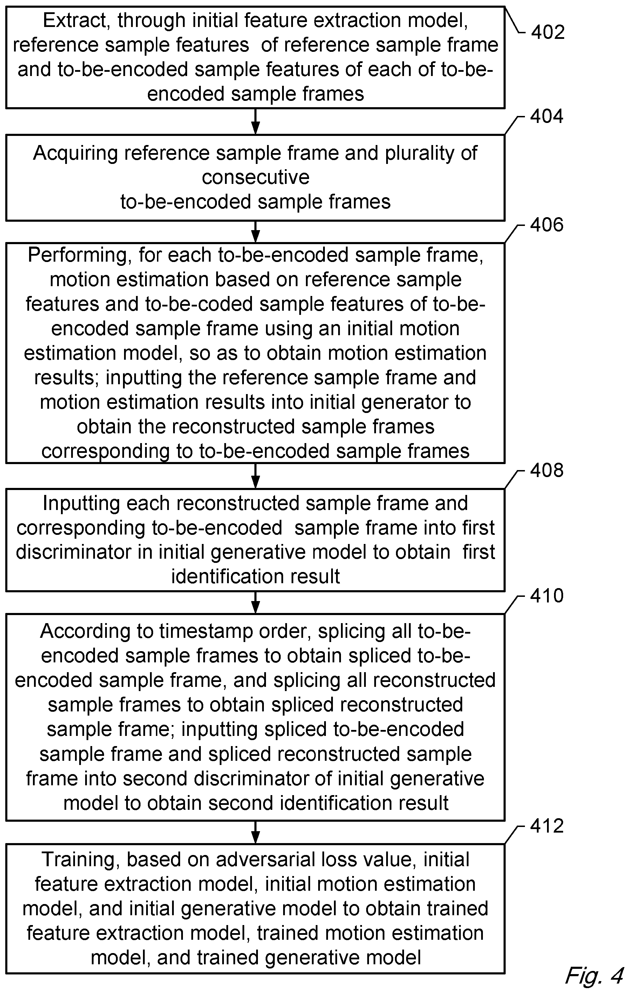

Please refer to FIG. 4, which is a flowchart of steps of a model training method according to Embodiment II of the present application. Specifically, the model training method provided in this embodiment comprises the following steps: S402: acquiring a reference sample frame and a plurality of consecutive to-be-encoded sample frames.

S404: extracting, through an initial feature extraction model, reference sample features of the reference sample frame and to-be-encoded sample features of each of the to-be-encoded sample frames.

S406: performing, for each to-be-encoded sample frame, motion estimation based on the reference sample features and the to-be-coded sample features of the to-be-encoded sample frame using an initial motion estimation model, so as to obtain the motion estimation results; inputting the reference sample frame and the motion estimation results into the initial generator to obtain the reconstructed sample frames corresponding to the to-be-encoded sample frames.

S408: inputting each reconstructed sample frame and the corresponding to-be-encoded sample frame into a first discriminator in the initial generative model to obtain a first identification result.

S410: according to a timestamp order, splicing the to-be-encoded sample frames to obtain a spliced to-be-encoded sample frame, and splicing the reconstructed sample frames to obtain a spliced reconstructed sample frame; inputting the spliced to-be-encoded sample frame and the spliced reconstructed sample frame into a second discriminator of the initial generative model to obtain a second identification result.

S412: training, based on the adversarial loss value, the initial feature extraction model, the initial motion estimation model, and the initial generative model to obtain a trained feature extraction model, a trained motion estimation model, and a trained generative model.

In the embodiment of the present application, the specific implementation method of each step can be found in the corresponding steps of Embodiment II, which will not be repeated herein again.

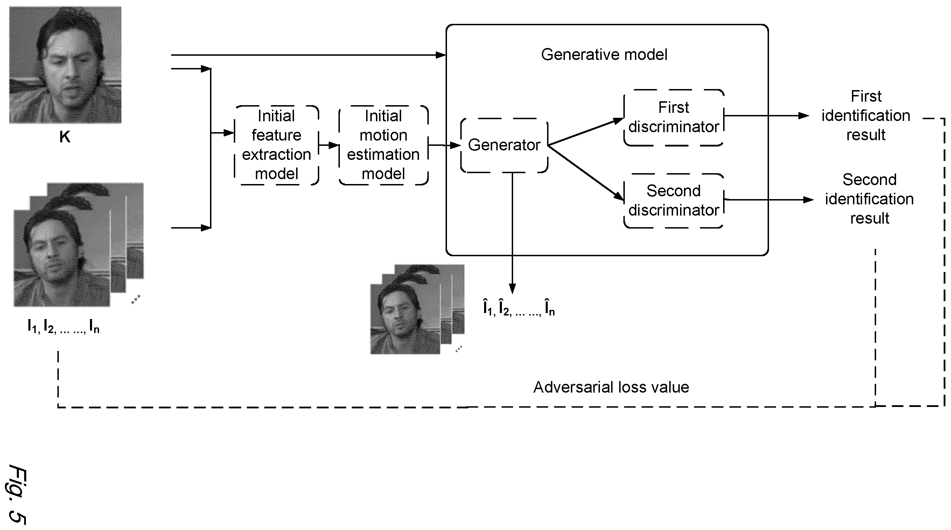

Please refer to FIG. 5, which is a schematic diagram of a scenario corresponding to the Embodiment I of the present application. Hereinafter, the embodiment of the present application will be described with reference to the schematic diagram shown in FIG. 5, using a specific scenario as an example:

A reference sample frame K and a plurality of consecutive to-be-encoded sample frames $I_1, I_2, ..., I_n$ are acquired; through an initial feature extraction model, reference sample features of the reference sample frame and to-be-encoded sample features of each of the to-be-encoded sample frames are extracted; for each to-be-encoded sample frame, motion estimation is performed based on the reference sample features and the to-be-coded sample features of the to-be-encoded sample frame using an initial motion estimation model, so as to obtain the motion estimation results; the reference sample frame K and the motion estimation results are inputted into the initial generator to obtain the reconstructed sample frames corresponding to the to-be-encoded sample frames. As such, the reconstructed sample frames: $\hat{I}_1, \hat{I}_2, ..., \hat{I}n$ are outputted through the generator. Each reconstructed sample frame and the corresponding to-be-encoded sample frame are inputted into a first discriminator in the initial generative model to obtain a first identification result; according to a timestamp order, all the to-be-encoded sample frames are spliced to obtain a spliced to-be-encoded sample frame, and all the reconstructed sample frames are spliced to obtain a spliced reconstructed sample frame; the spliced to-be-encoded sample frame and the spliced reconstructed sample frame are inputted into a second discriminator of the initial generative model to obtain a second identification result; based on the adversarial loss value, the initial feature extraction model, the initial motion estimation model, and the initial generative model are trained to obtain a trained feature extraction model, a trained motion estimation model, and a trained generative model.

The model training method provided in the embodiments of the present application generates reconstructed sample frames corresponding to a plurality of consecutive to-be-coded sample frames through the generator in the initial generative model. While an authenticity identification on a single reconstructed sample frame and the corresponding to-be-encoded sample frame is performed, another authenticity identification is also performed on the spliced reconstructed sample frame spliced together from all the reconstructed sample frames in the timestamp order and the spliced to-be-encoded sample frame spliced together from all the to-be-encoded sample frames in the timestamp order. As such, the adversarial loss value is generated based on the identification results from the single sample frames (first identification results) and the identification results from the spliced sample frames (second identification results), thereby completing the training of the initial generative model. That is to say, in the embodiments of the present application, when an authenticity identification is performed, not only the similarity between the reconstructed sample frame and the to-be-encoded sample frame in the spatial domain is considered, the similarity between the reconstructed sample frame and the to-be-encoded sample frame in the temporal domain is also considered. In other words, by comparing the similarity between the spliced to-be-encoded sample frame and the spliced reference sample frame, it is considered whether there is a continuous relationship between the consecutive reconstructed sample frames in the temporal domain that is present in the consecutive to-be-encoded sample frames. Therefore, by training the model based on the above identification results and reconstructing the video frames based on the trained generative model, the reconstructed video frame sequences can be kept consistent with the to-be-encoded video frame sequences in the temporal domain, thereby improving the phenomena of flickering and floating artifacts and enhancing the video reconstruction quality.

The model training method of the embodiment may be executed by any appropriate electronic device with data capabilities, including but not limited to: servers, PCs, and the like.

Embodiment III

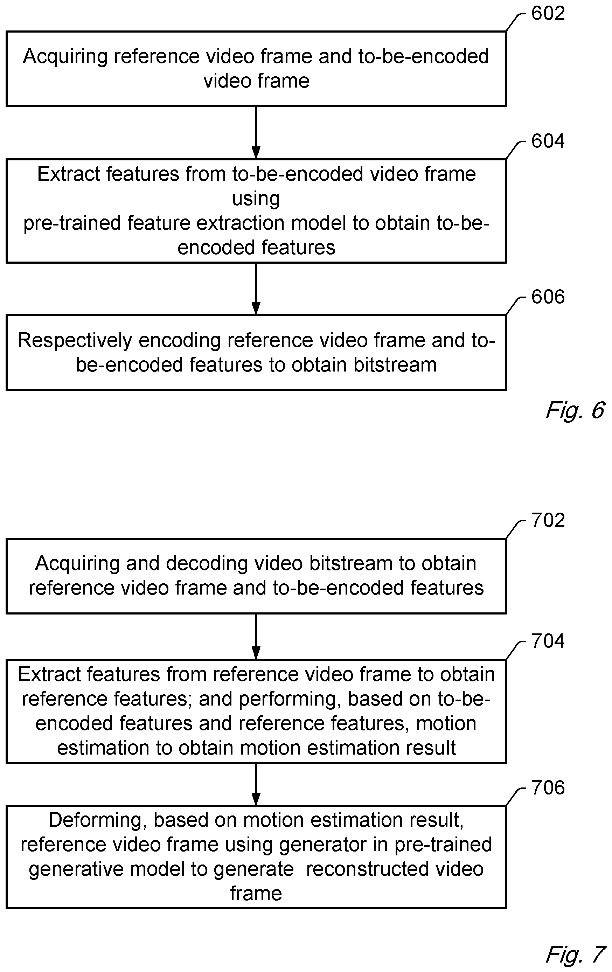

Please refer to FIG. 6, which is a flowchart of steps of a video encoding method according to Embodiment III of the present application. Specifically, the video encoding provided in this embodiment comprises the following steps:

S602: acquiring a reference video frame and a to-be-encoded video frame.
S604: extracting features from the to-be-encoded video frame using a pre-trained feature extraction model to obtain to-be-encoded features.

The feature extraction model is obtained through the model training method of Embodiment II.
S606: respectively encoding the reference video frame and the to-be-encoded features to obtain a bitstream.
The video encoding method of the embodiment may be executed by any appropriate electronic device with data capabilities, including but not limited to: servers, PCs, and the like.
The video encoding method provided in Embodiment III of the present application may be executed by a video encoding end (encoder) to encode video files with different resolutions, especially facial video files, so as to compress the digital bandwidth of the video files. The method may be applied to various scenarios, examples of which include: storage and streaming transmission of conventional video games involving faces with various resolutions. Specifically, the video frames of the video game may be encoded by the video encoding method provided by the embodiment of the present application to form a corresponding video bitstream for storage and transmission in a video streaming service or other similar applications. Other examples are low-latency scenarios such as video conferencing and live video broadcasting. Specifically, the facial video data with various resolutions collected by a video acquisition device may be encoded by the video encoding method provided in the embodiment of the present application to form a corresponding video bitstream, which is sent to a conference terminal; and the video bitstream is decoded by the conference terminal so as to obtain corresponding facial video pictures. A further example is a virtual reality scenario, where the facial video data with various resolutions collected by a video acquisition device may be encoded by the facial video encoding method provided in the embodiment of the present application to form a corresponding video bitstream, which is sent to a virtual reality related device (such as VR virtual glasses and the like); the video bitstream is decoded through the VR device to obtain corresponding facial video pictures, the corresponding VR function is implemented based on the facial video pictures, and so on.

Embodiment IV

Please refer to FIG. 7, which is a flowchart of steps of a video decoding method according to Embodiment IV of the present application. Specifically, the video decoding method provided in this embodiment comprises the following steps:

S702: acquiring and decoding a video bitstream to obtain a reference video frame and to-be-encoded features.
S704: extracting features from the reference video frame to obtain reference features; and performing, based on the to-be-encoded features and the reference features, motion estimation to obtain a motion estimation result.
S706: deforming, based on the motion estimation result, the reference video frame using a generator in a pre-trained generative model to generate a reconstructed video frame.

Herein, the generative model is obtained using the model training method according to the first aspect or the second aspect.
In the video decoding method provided in the embodiment of the present application, the generative model is trained and obtained in the following manner: reconstructed sample frames corresponding to a plurality of consecutive to-be-coded sample frames are generated through the generator in the initial generative model; while an authenticity identification on a single reconstructed sample frame and the corresponding to-be-encoded sample frame is performed, another authenticity identification is also performed on the spliced reconstructed sample frame spliced together from all the reconstructed sample frames in the timestamp order and the spliced to-be-encoded sample frame spliced together from all the to-be-encoded sample frames in the timestamp order. As such, the adversarial loss value is generated based on the identification results from the single sample frames (first identification results) and the identification results from the spliced sample frames (second identification results), and the training of the initial generative model may then be completed. That is to say, when an authenticity identification is performed, not only the similarity between the reconstructed sample frame and the to-be-encoded sample frame in the spatial domain is considered, the similarity between the reconstructed sample frame and the to-be-encoded sample frame in the temporal domain is also considered. **In** other words, by comparing the similarity between the spliced to-be-encoded sample frame and the spliced reference sample frame, it is considered whether there is a continuous relationship between the consecutive reconstructed sample frames in the temporal domain that is present in the consecutive to-be-encoded sample frames. Therefore, by training the model based on the above identification results and decoding the video frames based on the trained generative model, the reconstructed video frame sequences can be kept consistent with the to-be-encoded video frame sequences in the temporal domain, thereby improving the phenomena of flickering and floating artifacts and enhancing the video reconstruction quality.

The video decoding method of the embodiment may be executed by any appropriate electronic device with data capabilities, including but not limited to: servers, PCs, and the like.

Embodiment V

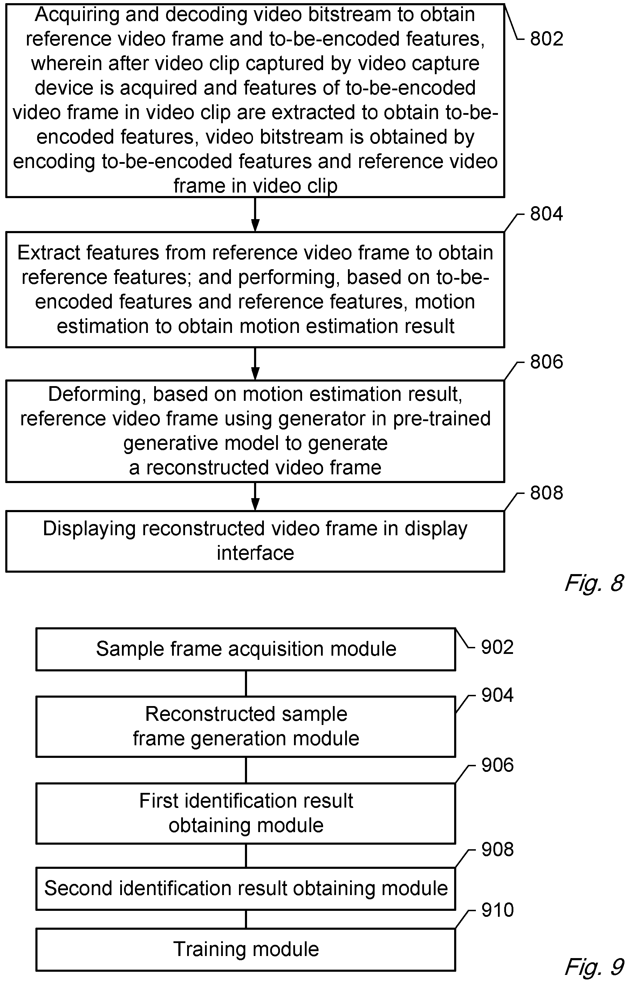

Please refer to FIG. 8, which is a flowchart of steps of a video decoding method according to Embodiment V of the present application. An application scenario of the video decoding method is as follows: a video acquisition device acquires a conference video clip; after the encoder extracts the features of the to-be-encoded video frames in the clip to obtain the to-be-encoded features, the to-be-encoded features and the reference video frames in the video clip are encoded to obtain a video bitstream, which is sent to a conference terminal; the conference terminal decodes the video bitstream to obtain the corresponding conference video pictures and displays the same.

Specifically, the video decoding method provided in this embodiment comprises the following steps:

S802: acquiring and decoding a video bitstream to obtain a reference video frame and to-be-encoded features, wherein after a video clip captured by a video capture device is acquired and features of a to-be-encoded video frame in the video clip are extracted to obtain to-be-encoded features, the video bitstream is obtained by encoding the to-be-encoded features and the reference video frame in the video clip.

S804: extracting features from the reference video frame to obtain reference features; and performing, based on the to-be-encoded features and the reference features, motion estimation to obtain a motion estimation result.

S806: deforming, based on the motion estimation result, the reference video frame using a generator in a pre-trained generative model to generate a reconstructed video frame.

Herein, the generative model is obtained using the model training method according to the first aspect or the second aspect.

S808: displaying the reconstructed video frame in a display interface.

In the video decoding method provided in the embodiment of the present application, the generative model is trained and obtained in the following manner: reconstructed sample frames corresponding to a plurality of consecutive to-be-coded sample frames are generated through the generator in the initial generative model; while an authenticity identification on a single reconstructed sample frame and the corresponding to-be-encoded sample frame is performed, another authenticity identification is also performed on the spliced reconstructed sample frame spliced together from all the reconstructed sample frames in the timestamp order and the spliced to-be-encoded sample frame spliced together from all the to-be-encoded sample frames in the timestamp order. As such, the adversarial loss value is generated based on the identification results from the single sample frames (first identification results) and the identification results from the spliced sample frames (second identification results), and the training of the initial generative model may then be completed. That is to say, in the embodiments of the present application, when an authenticity identification is performed, not only the similarity between the reconstructed sample frame and the to-be-encoded sample frame in the spatial domain is considered, the similarity between the reconstructed sample frame and the to-be-encoded sample frame in the temporal domain is also considered. In other words, by comparing the similarity between the spliced to-be-encoded sample frame and the spliced reference sample frame, it is considered whether there is a continuous relationship between the consecutive reconstructed sample frames in the temporal domain that is present in the consecutive to-be-encoded sample frames. Therefore, by training the model based on the above identification results and reconstructing the video frames based on the trained generative model, the reconstructed video frame sequences can be kept consistent with the to-be-encoded video frame sequences in the temporal domain, thereby improving the phenomena of flickering and floating artifacts and enhancing the video reconstruction quality.

The video decoding method of the embodiment may be executed by any appropriate electronic device with data capabilities, including but not limited to: servers, PCs, and the like.

Embodiment VI

Please refer to FIG. 9, which is a structural block diagram of a model training apparatus according to Embodiment VI of the present application. Specifically, the model training apparatus provided in this embodiment comprises:

a sample frame acquisition module 902, configured for acquiring a reference sample frame and a plurality of consecutive to-be-encoded sample frames;

a reconstructed sample frame generation module 904, configured for deforming the reference sample frame by using a generator in an initial generative model to generate reconstructed sample frames corresponding to each of the to-be-encoded sample frames;

a first identification result obtaining module 906, configured for inputting each reconstructed sample frame and the corresponding to-be-encoded sample frame into a first discriminator in the initial generative model to obtain a first identification result;

a second identification result obtaining module 908, configured for, according to a timestamp order, splicing all the to-be-encoded sample frames to obtain a spliced to-be-encoded sample frame, and splicing all the reconstructed sample frames to obtain a spliced reconstructed sample frame; inputting the spliced to-be-encoded sample frame and the spliced reconstructed sample frame into a second discriminator of the initial generative model to obtain a second identification result; and

a training module 910, configured for obtaining an adversarial loss value based on the first identification result and the second identification result, and training the initial generative model based on the adversarial loss value to obtain a trained generative model.

Optionally, in some embodiments, the adversarial loss value include: a generative adversarial loss value, a spatial adversarial loss value, and a temporal adversarial loss value;

the training module 910, when executing the step of obtaining the adversarial loss value based on the first identification result and the second identification result, is specifically configured for:

obtaining the generative adversarial loss value based on the first identification result of each reconstructed sample frame;

obtaining the spatial adversarial loss value based on a difference between the first identification result of each reconstructed sample frame and the first identification result of the corresponding to-be-encoded sample frame; and

obtaining the temporal adversarial loss value based on a difference between the second identification result of the spliced to-be-encoded sample frame and the second identification result of the spliced reconstructed sample frame.

Optionally, in some embodiments, when the training module 910 executes the step of obtaining the generative adversarial loss value based on the first identification result of each reconstructed sample frame, it is specifically configured for:

acquiring a probability distribution of the first identification result of each reconstructed sample frame as a first reconstruction probability distribution for each reconstructed sample frame; and obtaining the generative adversarial loss value based on an expected value of the first reconstruction probability distribution for each reconstructed sample frame.

When the training module 910 executes the step of obtaining the spatial adversarial loss value based on a difference between the first identification result of each reconstructed sample frame and the first identification result of the corresponding to-be-encoded sample frame, it is specifically configured for:

acquiring a probability distribution of the first identification result of each to-be-encoded sample frame as a first to-be-encoded probability distribution for each to-be-encoded sample frame; and obtaining the spatial adversarial loss value based on an expected difference between the expected value of the first reconstructed probability distribution for each reconstructed sample frame and an expected value of the first to-be-encoded probability distribution for each to-be-encoded sample frame.

When the training module 910 executes the step of obtaining the temporal adversarial loss value based on a difference between the second identification result of the spliced to-be-encoded sample frame and the second identification result of the spliced reconstructed sample frame, it is specifically configured for:

acquiring a probability distribution of the second identification result of the spliced reconstructed sample frame as a second reconstructed probability distribution; acquiring a probability distribution of the second identification result of the spliced to-be-encoded sample frame as a second to-be-encoded probability distribution; and obtaining the temporal adversarial loss value based on an expected difference between an expected value of the second reconstructed probability distribution and an expected value of the second to-be-encoded probability distribution.

Optionally, in some embodiments, the model training apparatus further comprises:

a perceptual loss value obtaining module, configured for, prior to training the initial generative model based on the adversarial loss value to obtain a trained generative model, generating a perceptual loss value based on each reconstructed sample frame and each to-be-encoded sample frame;

the training module 910, when executing the step of training the initial generative model based on the adversarial loss value to obtain a trained generative model, is specifically configured for:

training the initial generative model based on the adversarial loss value and the perceptual loss value to obtain the trained generative model.

Optionally, in some embodiments, the reconstructed sample frame generation module 904 is specifically configured for:

performing, based on the reference sample frame, motion estimation on each to-be-encoded sample frame to obtain a motion estimation result for each to-be-encoded sample frame;

inputting, for each to-be-encoded sample frame, the reference sample frame and the motion estimation results of the to-be-encoded sample frame into the generator of the initial generative model, and deforming the reference sample frame through the generator to generate the reconstructed sample frames corresponding to the to-be-encoded sample frames.

The model training apparatus further comprises:

an optical flow loss value generation module, configured for, prior to training the initial generative model based on the adversarial loss value and the perceptual loss value to obtain the trained generative model, inputting each to-be-encoded sample frame into a pre-trained motion prediction module to obtain actual motion results corresponding to each of the to-be-encoded samples; and generating an optical flow loss value based on a difference between the motion estimation results and the actual motion results of each of the to-be-encoded sample frames;

the training module 910, when executing the step of training the initial generative model based on the adversarial loss value and the perceptual loss value to obtain the trained generative model, is specifically configured for:

training the initial generative model based on the adversarial loss value, the perceptual loss value, and the optical flow loss value to obtain the trained generative model.

Optionally, in some embodiments, when the optical flow loss value generating module performs the step of generating an optical flow loss value based on a difference between the motion estimation results and the actual motion results of each of the to-be-encoded sample frames, it is specifically configured for:

calculating, for each to-be-encoded sample frame, the difference between the motion estimation result and the actual motion result thereof as a motion difference corresponding to the to-be-encoded sample frame; and summing each motion difference as the total motion difference;

The ratio of the total motion difference to the total number of to-be-encoded sample frames is calculated as the optical flow loss value.

Optionally, in some embodiments, the reconstructed sample frame generation module 904 is specifically configured for:

extracting, through an initial feature extraction model, reference sample features of the reference sample frame and to-be-encoded sample features of each of the to-be-encoded sample frames; and

performing, for each to-be-encoded sample frame, motion estimation based on the reference sample features and the to-be-coded sample features of the to-be-encoded sample frame using an initial motion estimation model, so as to obtain the motion estimation results; inputting the reference sample frame and the motion estimation results into the initial generator to obtain the reconstructed sample frames corresponding to the to-be-encoded sample frames.

The training module 910, when executing the step of training the initial generative model based on the adversarial loss value to obtain a trained generative model, is specifically configured for:

training, based on the adversarial loss value, the initial feature extraction model, the initial motion estimation model, and the initial generative model to obtain a trained feature extraction model, a trained motion estimation model, and a trained generative model.

The model training apparatus in this embodiment is used for implementing the corresponding model training methods in the multiple method embodiments described above and has the beneficial effects of the corresponding method embodiments, which will not be elaborated herein again. In addition, for the functional implementation of each module in the model training apparatus of this embodiment, the description of the corresponding parts in the aforementioned method embodiments can be referred to, which will not be repeated herein.

Embodiment VII

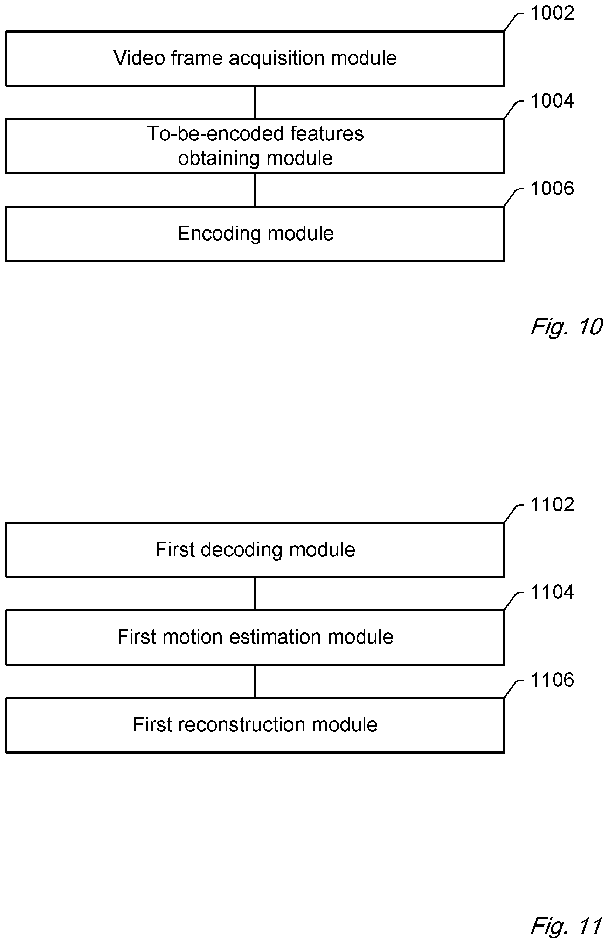

Please refer to FIG. 10, which is a structural block diagram of a video encoding apparatus according to Embodiment VII of the present application. Specifically, the video encoding apparatus provided in this embodiment comprises:

a video frame acquisition module 1002, configured for acquiring a reference video frame and a to-be-encoded video frame;

a to-be-encoded features obtaining module 1004, configured for extracting features from the to-be-encoded video frame using a pre-trained feature extraction model to obtain to-be-encoded features; and

an encoding module 1006, configured for respectively encoding the reference video frame and the to-be-encoded features to obtain a bitstream;

The feature extraction model is obtained through the model training method of Embodiment II.

The video encoding apparatus in this embodiment is used for implementing the corresponding video encoding methods in the multiple method embodiments described above and has the beneficial effects of the corresponding method embodiments, which will not be elaborated herein again. In addition, the functional implementation of each module in the video encoding apparatus of this embodiment can be referred to the description of the corresponding parts in the aforementioned method embodiments, and will not be repeated herein.

Embodiment VIII

Please refer to FIG. 11, which is a structural block diagram of a video decoding apparatus according to Embodiment VIII of the present application. Specifically, the video decoding apparatus provided in this embodiment comprises:

a first decoding module 1102, configured for acquiring and decoding a video bitstream to obtain a reference video frame and to-be-encoded features;

a first motion estimation module 1104, configured for extracting features from the reference video frame to obtain reference features; and performing, based on the to-be-encoded features and the reference features, motion estimation to obtain a motion estimation result; and

a first reconstruction module 1106, configured for deforming, based on the motion estimation result, the reference video frame using a generator in a pre-trained generative model to generate a reconstructed video frame.

Herein, the generative model is obtained through the model training method of the above-mentioned Embodiment I or Embodiment II.

The video decoding apparatus in this embodiment is used for implementing the corresponding video decoding methods in the multiple method embodiments described above and has the beneficial effects of the corresponding method embodiments, which will not be elaborated herein again. In addition, the functional implementation of each module in the video decoding apparatus of this embodiment can be referred to the description of the corresponding parts in the aforementioned method embodiments, and will not be repeated herein.

Embodiment IX

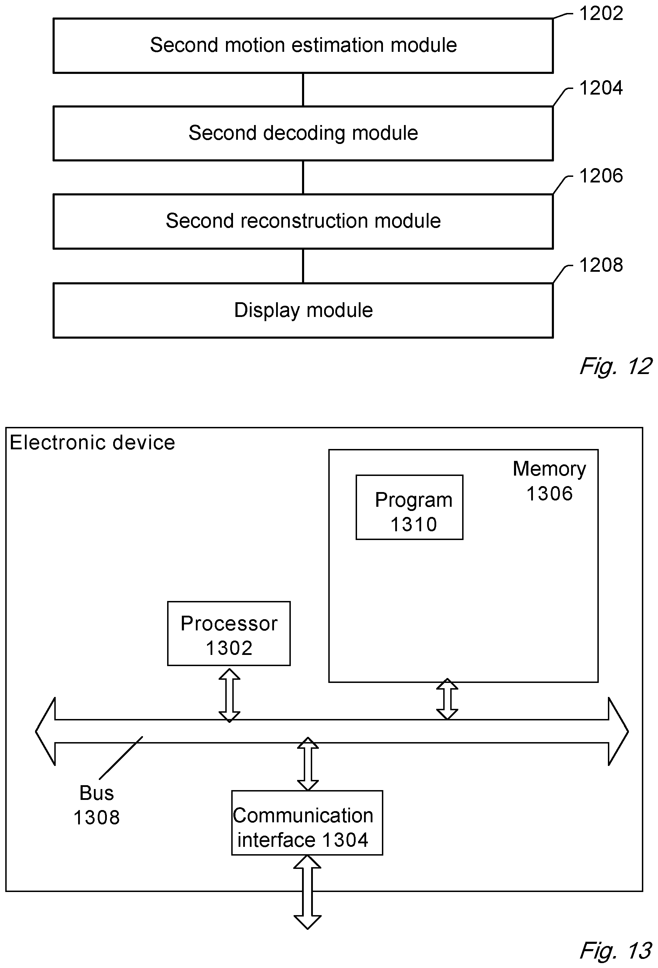

Please refer to FIG. 12, which is a structural block diagram of a video decoding apparatus according to Embodiment IX of the present application. Specifically, the video decoding apparatus provided in this embodiment comprises:

a second decoding module 1202, configured for acquiring and decoding a video bitstream to obtain a reference video frame and to-be-encoded features, wherein after a video clip captured by a video capture device is acquired and features of a to-be-encoded video frame in the video clip are extracted to obtain to-be-encoded features, the video bitstream is obtained by encoding the to-be-encoded features and the reference video frame in the video clip;

a second motion estimation module 1204, configured for extracting features from the reference video frame to obtain reference features; and performing, based on the to-be-encoded features and the reference features, motion estimation to obtain a motion estimation result;

a second reconstruction module 1206, configured for deforming, based on the motion estimation result, the reference video frame using a generator in a pre-trained generative model to generate a reconstructed video frame; and

a display module 1208, configured for displaying the reconstructed video frame in a display interface;

Herein, the generative model is obtained through the model training method of the above-mentioned Embodiment I or Embodiment II.

The video decoding apparatus in this embodiment is used for implementing the corresponding video decoding methods in the multiple method embodiments described above and has the beneficial effects of the corresponding method embodiments, which will not be elaborated herein again. In addition, the functional implementation of each module in the video decoding apparatus of this embodiment can be referred to the description of the corresponding parts in the aforementioned method embodiments, and will not be repeated herein.

Embodiment X

Please refer to FIG. 13, which shows a schematic structural diagram of an electronic device provided in Embodiment X of the present invention. The implementation manners of the electronic device are not limited thereby.

As shown in FIG. 13, a conference terminal may comprise: a processor 1302, a communications interface 1304, a memory 1306, and a communications bus 1308.

Here,

the processor 1302, the communications interface 1304, and the memory 1306 communicate with each other through the communications bus 1308.

The communications interface 1304 is configured to communicate with other electronic devices or servers.

The processor 1302 is configured to execute a program 1310, and specifically may execute the relevant steps in the above-mentioned model training, video encoding, or video decoding method embodiments.

For example, the program 1310 may include program codes, and the program codes include computer operation instructions.

The processor 1302 may be a central processing unit (CPU), or an application specific integrated circuit (ASIC), or one or more integrated circuits configured to implement the embodiments of the present application. One or more processors included in a smart device may be the same type of processors, such as one or more CPUs; or may be different types of processors, such as one or more CPUs and one or more ASICs.

The memory 1306 is configured to store the program 1310. The memory 1306 may include a high-speed random-access memory (RAM), and may also include a non-volatile memory such as at least one disk memory.

The program 1310 may be specifically configured to enable the processor 1302 to perform the following operations: acquiring a reference sample frame and a plurality of consecutive to-be-encoded sample frames; deforming the reference sample frame through a generator in an initial generative model to generate reconstructed sample frames corresponding to each of the to-be-encoded sample frames; inputting each reconstructed sample frame and the corresponding to-be-encoded sample frame into a first discriminator in the initial generative model to obtain a first identification result; splicing the to-be-encoded sample frames in a timestamp order to obtain a spliced to-be-encoded sample frame, and splicing the reconstructed sample frames to obtain a spliced reconstructed sample frame; inputting the spliced to-be-encoded sample frame and the spliced reconstructed sample frame into a second discriminator in the initial generative model to obtain a second identification result; obtaining an adversarial loss value based on the first identification result and the second identification result; and training the initial generative model based on the adversarial loss value to obtain a trained generative model.

Alternatively,

the program 1310 may be specifically configured to enable the processor 1302 to perform the following operations: acquiring a reference video frame and a to-be-encoded video frame; extracting features from the to-be-encoded video frame using a pre-trained feature extraction model to obtain to-be-encoded features; respectively encoding the reference video frame and the to-be-encoded features to obtain a bitstream, wherein the generative model is obtained through the model training method according to the above-mentioned second aspect.

Alternatively,

the program 1310 may be specifically configured for enabling the processor 1302 to perform the following operations: acquiring and decoding a video bitstream to obtain a reference video frame and to-be-encoded features; extracting features from the reference video frame to obtain reference features; and performing, based on the to-be-encoded features and the reference features, motion estimation to obtain a motion estimation result; deforming, based on the motion estimation result, the reference video frame using a generator in a pre-trained generative model to generate a reconstructed video frame, wherein the generated model is obtained through the model training method according to the above-mentioned first aspect or second aspect.

Alternatively,

the program 1310 may be specifically configured for enabling the processor 1302 to perform the following operations: acquiring and decoding a video bitstream to obtain a reference video frame and to-be-encoded features; after a video clip captured by a video capture device is acquired and features of a to-be-encoded video frame in the video clip are extracted to obtain to-be-encoded features, the video bitstream is obtained by encoding the to-be-encoded features and the reference video frame in the video clip; extracting features from the reference video frame to obtain reference features; and performing, based on the to-be-encoded features and the reference features, motion estimation to obtain a motion estimation result; deforming, based on the motion estimation result, the reference video frame using a generator in a pre-trained generative model to generate a reconstructed video frame; displaying the reconstructed video frame in a display interface, wherein the generated model is obtained through the model training method according to the above-mentioned first aspect or second aspect.

For the implementation of each step in the program 1310, reference may be made to the corresponding description of the corresponding steps and units in the above-described model training, video encoding, or video decoding method embodiments, which will not be elaborated herein. Those skilled in the art can clearly understand that, for the convenience and brevity of description, reference may be made to the corresponding process descriptions in the above-described method embodiments for the specific working process of the above-described devices and modules, which will not be elaborated here.

The electronic device provided in the embodiments of the present application generates reconstructed sample frames corresponding to a plurality of consecutive to-be-coded sample frames through the generator in the initial generative model. While an authenticity identification on a single reconstructed sample frame and the corresponding to-be-encoded sample frame is performed, another authenticity identification is also performed on the spliced reconstructed sample frame spliced together from all the reconstructed sample frames in the timestamp order and the spliced to-be-encoded sample frame spliced together from all the to-be-encoded sample frames in the timestamp order. As such, the adversarial loss value is generated based on the identification results from the single sample frames (first identification results) and the identification results from the spliced sample frames (second identification results), and the training of the initial generative model may then be completed. That is to say, in the embodiments of the present application, when an authenticity identification is performed, not only the similarity between the reconstructed sample frame and the to-be-encoded sample frame in the spatial domain is considered, the similarity between the reconstructed sample frame and the to-be-encoded sample frame in the temporal domain is also considered. In other words, by comparing the similarity between the spliced to-be-encoded sample frame and the spliced reference sample frame, it is considered whether there is a continuous relationship between the consecutive reconstructed sample frames in the temporal domain that is present in the consecutive to-be-encoded sample frames. Therefore, by training the model based on the above identification results and reconstructing the video frames based on the trained generative model, the reconstructed video frame sequences can be kept consistent with the to-be-encoded video frame sequences in the temporal domain, thereby improving the phenomena of flickering and floating artifacts and enhancing the video reconstruction quality.

Further provided in an embodiment of the present application is a computer program product that comprises computer instructions, which instruct a computing device to execute operations corresponding to any one of the above-mentioned multiple method embodiments.

It should be noted that according to the needs of implementation, each component/step described in the embodiments of the present application may be split into more components/steps, or two or more components/steps or some operations of components/steps may be combined into new components/steps to achieve the purpose of the embodiments of the present application.

The above-described methods according to the embodiments of the present application may be implemented in hardware, firmware, or implemented as software or computer codes that may be stored in a recording medium (such as CD ROMs, RAMs, floppy disks, hard disks, or magneto-optical disks), or implemented as computer codes downloaded over a network and originally stored in a remote recording medium or non-transitory machine-readable medium and to be stored in a local recording medium, so that the methods described herein can be processed by such software stored on a recording medium using a general-purpose computer, a special-purpose processor or programmable or dedicated hardware (such as ASICs or FPGAs). It can be appreciated that a computer, a processor, a microprocessor controller, or programmable hardware includes storage components (for example, RAMs, ROMs, flash memories, etc.) that can store or receive software or computer codes, and the software or computer codes, when accessed and executed by the computer, processor, or hardware, implement the model training methods, video encoding methods, or the video decoding methods described herein. Further, when a general-purpose computer accesses codes for implementing the model training methods, the video encoding methods, or the video decoding methods described herein, the execution of the codes converts the general-purpose computer to a dedicated computer for performing the model training methods, the video encoding methods, or the video decoding methods described herein.

Those of ordinary skill in the art can realize that the units and method steps of each example described in conjunction with the embodiments disclosed herein can be implemented in electronic hardware or a combination of computer software and electronic hardware. Whether these functions are performed in hardware or software depends on the application and design constraints of the technical solution. Those skilled in the art may implement the described functions using different methods for each application, but such implementation should not be considered to be beyond the scope of the embodiments of the present application.

The above-described implementation manners are only used to illustrate the embodiments of the present application, but not to limit the embodiments of the present application. Those of ordinary skill in the art can also make various changes and modifications without departing from the spirit and scope of the embodiments of the present application. Therefore, all equivalent technical solutions also belong to the scope of the embodiments of the present invention, and the scope of patent protection of the embodiments of the present application should be defined by the claims.

**Claims**

1.  A model training method comprising:

acquiring a reference sample frame and a plurality of consecutive to-be-encoded sample frames;
deforming the reference sample frame by using a generator in an initial generative model to generate a reconstructed sample frame corresponding to each of the to-be-encoded sample frames;
inputting each reconstructed sample frame and a corresponding to-be-encoded sample frame into a first discriminator in the initial generative model to obtain a first identification result;
according to a timestamp order, splicing the to-be-encoded sample frames to obtain a spliced to-be-encoded sample frame, and splicing reconstructed sample frames to obtain a spliced reconstructed sample frame;
inputting the spliced to-be-encoded sample frame and the spliced reconstructed sample frame into a second discriminator of the initial generative model to obtain a second identification result;
obtaining an adversarial loss value based on the first identification result and the second identification result; and
training the initial generative model based on the adversarial loss value to obtain a trained generative model.

2.  The method according to claim 1, wherein:

the adversarial loss value comprises: a generative adversarial loss value, a spatial adversarial loss value, and a temporal adversarial loss value; and
the obtaining the adversarial loss value based on the first identification result and the second identification result comprises:

obtaining the generative adversarial loss value based on the first identification result of each reconstructed sample frame;
obtaining the spatial adversarial loss value based on a difference between the first identification result of each reconstructed sample frame and the first identification result of the corresponding to-be-encoded sample frame; and
obtaining the temporal adversarial loss value based on a difference between the second identification result of the spliced to-be-encoded sample frame and the second identification result of the spliced reconstructed sample frame.

3.  The method according to claim 2, wherein:
the obtaining the generative adversarial loss value based on the first identification result of each reconstructed sample frame comprises:

acquiring a probability distribution of the first identification result of each reconstructed sample frame as a first reconstruction probability distribution for each reconstructed sample frame; and
obtaining the generative adversarial loss value based on an expected value of a first reconstruction probability distribution for each reconstructed sample frame;
the obtaining the spatial adversarial loss value based on the difference between the first identification result of each reconstructed sample frame and the first identification result of the corresponding to-be-encoded sample frame comprises:

acquiring a probability distribution of the first identification result of each to-be-encoded sample frame as a first to-be-encoded probability distribution for each to-be-encoded sample frame; and

obtaining the spatial adversarial loss value based on an expected difference between the expected value of a first reconstructed probability distribution for each reconstructed sample frame and an expected value of the first to-be-encoded probability distribution for each to-be-encoded sample frame; and

the obtaining the temporal adversarial loss value based on the difference between the second identification result of the spliced to-be-encoded sample frame and the second identification result of the spliced reconstructed sample frame comprises:

acquiring a probability distribution of the second identification result of the spliced reconstructed sample frame as a second reconstructed probability distribution;

acquiring a probability distribution of the second identification result of the spliced to-be-encoded sample frame as a second to-be-encoded probability distribution; and

obtaining the temporal adversarial loss value based on an expected difference between an expected value of the second reconstructed probability distribution and an expected value of the second to-be-encoded probability distribution.

4. The method according to claim 1, wherein:

prior to training the initial generative model based on the adversarial loss value to obtain the trained generative model, the method further comprises generating a perceptual loss value based on each reconstructed sample frame and each to-be-encoded sample frame; and

the training the initial generative model based on the adversarial loss value to obtain the trained generative model comprises training the initial generative model based on the adversarial loss value and the perceptual loss value to obtain the trained generative model.

5. The method according to claim 4, wherein:
the deforming the reference sample frame by using the generator in the initial generative model to generate reconstructed sample frames corresponding to each of the to-be-encoded sample frames comprises:

performing, based on the reference sample frame, motion estimation on each to-be-encoded sample frame to obtain a motion estimation result for each to-be-encoded sample frame; and

inputting, for each to-be-encoded sample frame, the reference sample frame and motion estimation results of the to-be-encoded sample frames into the generator of the initial generative model, and deforming the reference sample frame through the generator to generate the reconstructed sample frames corresponding to the to-be-encoded sample frames;

prior to training the initial generative model based on the adversarial loss value and the perceptual loss value to obtain the trained generative model, the method further comprises:

inputting each to-be-encoded sample frame into a pre-trained motion prediction module to obtain actual motion results corresponding to each of the to-be-encoded samples; and

generating an optical flow loss value based on a difference between the motion estimation results and the actual motion results of each of the to-be-encoded sample frames; and

the training the initial generative model based on the adversarial loss value and the perceptual loss value to obtain the trained generative model comprises training the initial generative model based on the adversarial loss value, the perceptual loss value, and the optical flow loss value to obtain the trained generative model.

6. The method according to claim 5, wherein the generating the optical flow loss value based on the difference between the motion estimation results and actual motion results of each of the to-be-encoded sample frames comprises:

calculating, for a respective to-be-encoded sample frame, the difference between the motion estimation result and the actual motion result thereof as a motion difference corresponding to the respective to-be-encoded sample frame; and

summing each motion difference as the optical flow loss value.

7. The method according to claim 1, wherein:

the deforming the reference sample frame by using the generator in the initial generative model to generate reconstructed sample frames corresponding to each of the to-be-encoded sample frame comprises:

extracting, through an initial feature extraction model, reference sample features of the reference sample frame and to-be-encoded sample features of each of the to-be-encoded sample frames;

performing, for a respective to-be-encoded sample frame, motion estimation based on the reference sample features and the to-be-encoded sample features of the respective to-be-encoded sample frame using an initial motion estimation model to obtain a motion estimation result; and

inputting the reference sample frame and the motion estimation result into the initial generator to obtain the reconstructed sample frames corresponding to the respective to-be-encoded sample frame; and

the training the initial generative model based on the adversarial loss value to obtain the trained generative model comprises training, based on the adversarial loss value, the initial feature extraction model, the initial motion estimation model, and the initial generative model to obtain a trained feature extraction model, a trained motion estimation model, and a trained generative model.

8. A video encoding method comprising:

acquiring a reference video frame and a to-be-encoded video frame;

extracting features from the to-be-encoded video frame using a pre-trained feature extraction model to obtain to-be-encoded features; and

respectively encoding the reference video frame and the to-be-encoded features to obtain a bitstream, wherein a feature extraction model is obtained using the model training method described in claim 7.

9. A video decoding method comprising:

acquiring and decoding a video bitstream to obtain a reference video frame and to-be-encoded features;

extracting features from the reference video frame to obtain reference features;

performing motion estimation based on the to-be-encoded features and the reference features to obtain a motion estimation result; and

deforming, based on the motion estimation result, the reference video frame using a generator in a pre-trained generative model to generate a reconstructed video frame,

wherein a generative model is obtained using the model training method described in any one of claims 1-7.

10. A video decoding method, applied to a conference terminal device, comprising:

acquiring and decoding a video bitstream to obtain a reference video frame and to-be-encoded features, wherein after a video clip captured by a video capture device is acquired and features of a to-be-encoded video frame in the video clip are extracted to obtain to-be-encoded features, the video bitstream is obtained by encoding the to-be-encoded features and the reference video frame in the video clip;

extracting features from the reference video frame to obtain reference features; and performing, based on the to-be-encoded features and the reference features, motion estimation to obtain a motion estimation result;

deforming, based on the motion estimation result, the reference video frame using a generator in a pre-trained generative model to generate a reconstructed video frame; and

displaying the reconstructed video frame in a display interface,

wherein a generative model is obtained using the model training method described in any one of claims 1-7.

11. An electronic device comprising:

a processor;

a memory;

a communications interface; and

a communications bus,

wherein:

the processor, the memory, and the communications interface communicate with each other through the communications bus; and

the memory is configured to store at least one executable instruction that enables the processor to execute operations corresponding to the model training method as described in any one of claims 1-7, operations corresponding to the video encoding method as described in claim 8, or operations corresponding to the video decoding method as described in claim 9 or 10.

12. A computer storage medium having stored thereon a computer program, which, when executed by a processor, implements the model training method as described in any one of claims 1 to 7, the video encoding method as described in claim 8, or the video decoding method as described in claim 9 or 10.

13. A computer program product comprising computer instructions, wherein the computer instructions instruct a computing device to perform operations corresponding to the model training method as described in any one of claims 1 to 7, operations corresponding to the video encoding method as described in claim 8, or operations corresponding to the video decoding method as described in claim 9 or 10.

*Fig. 1*

Acquiring reference sample frame and plurality of consecutive to-be-encoded sample frames ⌐ 202

Deforming reference sample frame by means of generator in initial generative model to generate reconstructed sample frames corresponding to each of to-be-encoded sample frames ⌐ 204

Inputting each reconstructed sample frame and corresponding to-be-encoded sample frame into first discriminator in initial generative model to obtain first identification result ⌐ 206

According to timestamp order, splicing all to-be-encoded sample frames to obtain spliced to-be-encoded sample frame, and splicing all reconstructed sample frames to obtain spliced reconstructed sample frame; inputting spliced to-be-encoded sample frame and spliced reconstructed sample frame into second discriminator of initial generative model to obtain second identification result ⌐ 208

Obtaining adversarial loss value based on first identification result and second identification result, and training initial generative model based on adversarial loss value to obtain trained generative model ⌐ 210

*Fig. 2*

EP 4 546 223 A1

Generator

G

K

Encoding part | Decoding part

Î_i

Motion estimation result

Spatial discriminator

I_i

Î_i

D_s → True/ False

Temporal discriminator

I_{1-n}

Î_{1-n}

D_t → True/ False

*Fig. 3*

Extract, through initial feature extraction model, reference sample features of reference sample frame and to-be-encoded sample features of each of to-be-encoded sample frames ⌐ 402

↓

Acquiring reference sample frame and plurality of consecutive to-be-encoded sample frames ⌐ 404

↓

Performing, for each to-be-encoded sample frame, motion estimation based on reference sample features and to-be-coded sample features of to-be-encoded sample frame using an initial motion estimation model, so as to obtain motion estimation results; inputting the reference sample frame and motion estimation results into initial generator to obtain the reconstructed sample frames corresponding to to-be-encoded sample frames ⌐ 406

↓

Inputting each reconstructed sample frame and corresponding to-be-encoded sample frame into first discriminator in initial generative model to obtain first identification result ⌐ 408

↓

According to timestamp order, splicing all to-be-encoded sample frames to obtain spliced to-be-encoded sample frame, and splicing all reconstructed sample frames to obtain spliced reconstructed sample frame; inputting spliced to-be-encoded sample frame and spliced reconstructed sample frame into second discriminator of initial generative model to obtain second identification result ⌐ 410

↓

Training, based on adversarial loss value, initial feature extraction model, initial motion estimation model, and initial generative model to obtain trained feature extraction model, trained motion estimation model, and trained generative model ⌐ 412

*Fig. 4*

Fig. 5

602

Acquiring reference video frame and to-be-encoded
video frame

604

Extract features from to-be-encoded video frame
using
pre-trained feature extraction model to obtain to-be-
encoded features

606

Respectively encoding reference video frame and to-
be-encoded features to obtain bitstream

*Fig. 6*

702

Acquiring and decoding video bitstream to obtain
reference video frame and to-be-encoded features

704

Extract features from reference video frame to obtain
reference features; and performing, based on to-be-
encoded features and reference features, motion
estimation to obtain motion estimation result

706

Deforming, based on motion estimation result,
reference video frame using generator in pre-trained
generative model to generate reconstructed video
frame

*Fig. 7*

Acquiring and decoding video bitstream to obtain reference video frame and to-be-encoded features, wherein after video clip captured by video capture device is acquired and features of to-be-encoded video frame in video clip are extracted to obtain to-be-encoded features, video bitstream is obtained by encoding to-be-encoded features and reference video frame in video clip ⟍ 802

Extract features from reference video frame to obtain reference features; and performing, based on to-be-encoded features and reference features, motion estimation to obtain motion estimation result ⟋ 804

Deforming, based on motion estimation result, reference video frame using generator in pre-trained generative model to generate a reconstructed video frame ⟋ 806

Displaying reconstructed video frame in display interface ⟋ 808

*Fig. 8*

Sample frame acquisition module ⟍ 902

Reconstructed sample frame generation module ⟋ 904

First identification result obtaining module ⟋ 906

Second identification result obtaining module ⟋ 908

Training module ⟋ 910

*Fig. 9*

1002

Video frame acquisition module

1004

To-be-encoded features
obtaining module

1006

Encoding module

*Fig. 10*

1102

First decoding module

1104

First motion estimation module

1106

First reconstruction module

*Fig. 11*

Second motion estimation module — 1202

Second decoding module — 1204

Second reconstruction module — 1206

Display module — 1208

*Fig. 12*

Electronic device

Memory 1306

Program 1310

Processor 1302

Bus 1308

Communication interface 1304

*Fig. 13*

# INTERNATIONAL SEARCH REPORT

| | International application No. |
|---|---|
| | **PCT/CN2023/101961** |

**A. CLASSIFICATION OF SUBJECT MATTER**

G06N 20/00(2019.01)i

According to International Patent Classification (IPC) or to both national classification and IPC

**B. FIELDS SEARCHED**

Minimum documentation searched (classification system followed by classification symbols)

IPC:G06F,G06N

Documentation searched other than minimum documentation to the extent that such documents are included in the fields searched

Electronic data base consulted during the international search (name of data base and, where practicable, search terms used)

CNTXT, ENTXTC, ENTXT, DWPI, CNKI: 生成式对抗, 对抗损失, 感知损失, 光流损失, 损失, 鉴别, 空间, 时间, 样本, 运动, 编码, 译码, GAN, adversar+, perceptua+, flow loss, discriminat+, spatial, time, sample, motion, mov+, cod+, decod+

**C. DOCUMENTS CONSIDERED TO BE RELEVANT**

| Category* | Citation of document, with indication, where appropriate, of the relevant passages | Relevant to claim No. |
|---|---|---|
| PX | CN 114897189 A (ALIBABA (CHINA) CO., LTD.) 12 August 2022 (2022-08-12) claims 1-13 | 1-13 |
| X | US 2020134804 A1 (NEC LABORATORIES AMERICA, INC.) 30 April 2020 (2020-04-30) description, paragraphs [0048]-[0247], and figures 1-8 | 1-3, 7-13 |
| Y | US 2020134804 A1 (NEC LABORATORIES AMERICA, INC.) 30 April 2020 (2020-04-30) description, paragraphs [0048]-[0247], and figures 1-8 | 46 |
| Y | US 2021125583 A1 (FACEBOOK TECHNOLOGIES, LLC) 29 April 2021 (2021-04-29) description, paragraph [0056] | 4-6 |
| A | CN 111901598 A (SOUTH CHINA UNIVERSITY OF TECHNOLOGY et al.) 06 November 2020 (2020-11-06) entire document | 1-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 September 2023** | **07 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101961**

| Patent document cited in search report | | | Publication date (day/month/year) | Patent family member(s) | | | Publication date (day/month/year) |
|---|---|---|---|---|---|---|---|
| CN | 114897189 | A | 12 August 2022 | None | | | |
| US | 2020134804 | A1 | 30 April 2020 | US | 11538143 | B2 | 27 December 2022 |
| US | 2021125583 | A1 | 29 April 2021 | US | 11037531 | B2 | 15 June 2021 |
| CN | 111901598 | A | 06 November 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210716223